# EUROPÄISCHE PATENTANMELDUNG

(11) **EP 2 801 268 A2**
(43) Veröffentlichungstag der Anmeldung: **12.11.2014**
(21) Anmeldenummer: 14167300.4
(22) Anmeldetag: 07.05.2014
(51) Int. Cl.: A24C 5/39, B65G 15/30, F16G 3/02, F16G 3/10

(54) **Tabakverteilvorrichtung und Verfahren zum Einsetzen eines Fördergurtes in eine Fördereinheit einer Tabakverteilvorrichtung**

(30) Priorität: 07.05.2013 DE 102013104709
(71) Anmelder: SMC System Management Consulting GmbH, 21079 Hamburg (DE); MTS Tobacco, S.A., 31160 Orcoyen (ES)
(72) Erfinder: Rapp, Michael, 21033 Hamburg (DE); Vaitl, René, 21079 Hamburg (DE); Beckmann, Frank, 21521 Aumühle (DE)
(74) Vertreter: Cohausz & Florack

(57) **Zusammenfassung**

Die Erfindung betrifft eine Tabakverteilvorrichtung mit einer Tabakversorgungseinheit, mit einer Fördereinheit, mit einem in der Fördereinheit angeordneten Fördergurt (8) und mit einer Tabakaufbereitungseinheit. Die Erfindung betrifft des Weiteren ein Verfahren zum Einsetzen eines Fördergurtes in eine Fördereinheit einer Tabakverteilvorrichtung. Die Aufgabe, eine Tabakverteilvorrichtung und ein Verfahren zum Einsetzen eines Fördergurtes in eine Fördereinheit einer Tabakverteilvorrichtung anzugeben, wobei ein einfacher, stabiler und kompakter Aufbau der Tabakverteilvorrichtung erzielt werden kann und gleichzeitig das Auswechseln des Gurtes einfach zu handhaben ist, wird dadurch gelöst, dass der Fördergurt zwei durch eine Unterbrechung quer zur Förderrichtung gebildete Fördergurtenden (32,34) und ein Schloss (36) zur Verbindung der zwei Fördergurtenden durch Formschluss aufweist. Zudem wird dir Aufgabe dadurch gelöst, dass ein einzubringender Fördergurt mit zwei durch eine Unterbrechung quer zur Förderrichtung gebildeten Fördergurtenden und mit einem Schloss zur Verbindung der zwei Fördergurtenden in die Fördereinheit mit geöffnetem Schloss eingebracht wird und
das Schloss des eingebrachten Fördergurts in der Fördereinheit geschlossen wird.

## Beschreibung

Die Erfindung betrifft eine Tabakverteilvorrichtung mit einer Tabakversorgungseinheit, mit einer Fördereinheit, mit einem in der Fördereinheit angeordneten Fördergurt und mit einer Tabakaufbereitungseinheit. Die Erfindung betrifft des Weiteren ein Verfahren zum Einsetzen eines Fördergurtes in eine Fördereinheit einer Tabakverteilvorrichtung.

Bei der Produktion von stabförmigen Rauchartikeln, beispielsweise Zigaretten, ist es aus dem Stand der Technik bekannt, den Tabak zunächst manuell oder automatisiert einer sogenannten Tabakverteilvorrichtung, auch Verteilereinheit genannt, zuzuführen. Durch den Transport oder die Lagerung des Tabaks kann dieser unterschiedlich stark komprimiert sein und beispielsweise unterschiedliche Dichten aufweisen und muss daher vor einer Weiterverarbeitung zu stabförmigen Rauchartikeln vorbereitet werden. In der Tabakverteilvorrichtung findet eine entsprechende Aufbereitung in Form von Auflockerung und Sichtung des Tabaks statt, bevor dieser mittels weiterer Verarbeitungsschritte weiterverarbeitet wird.

Darauffolgend wird der Tabak in der Regel anschließend über einen Saugstrangförderer, welcher den Tabak fließbandähnlich als einen endlosen Tabakstrang transportiert, einer Strangeinheit zugeführt. Die Strangeinheit sorgt dafür, dass der offene Tabakstrang in Papier eingewickelt, in der Regel in eine zylindrische Form gebracht und das Papier verleimt wird. Somit entsteht ein endloser, geführter Tabakstrang. Dieser Tabakstrang wird dann während des Transports durch die Strangeinheit in einzelne zylindrische Tabakstöcke geschnitten, welche in der Regel die doppelte Länge der späteren fertigen Tabakstöcke im Produkt aufweisen. Anschließend werden die Tabakstöcke stattdessen quer zu ihrer Längsachse transportiert, da die Tabakstöcke sonst nicht effizient und beschädigungsfrei maschinell handhabbar und weiterzuverarbeiten sind. Hierfür werden die doppeltlangen geformten Tabakstöcke für das Ein- oder Ansetzten von Filtern in der Regel in Mulden auf der Oberfläche von rotierenden zylindrischen Trommeln transportiert, wobei die Tabakstöcke achsparallel zur Achse der Trommel angeordnet sind. Die doppeltlangen geformten Tabakstöcke werden hierzu mittig in zwei Tabakstöcke zertrennt, gespreizt und ein Filter wird zwischen die beiden Tabakstöcke gesetzt. Wird nun auch der Filter noch einmal mittig zertrennt, erhält man zwei Zigaretten gewünschter Länge.

Allerdings kann der Tabak anstatt einem Saugstrangförderer zugeführt zu werden, beispielsweise auch einer Verpackungseinheit zugeführt werden. Der Tabak wird dann in einzelnen Portionen verpackt, um in dieser Form an die Verbraucher verkauft zu werden. Das "Drehen" der Zigaretten wird dann vom Verbraucher durchgeführt. Aber auch in diesem Fall muss eine Auflockerung und Sichtung des Tabaks und ein entsprechender Transport des Tabaks mittels Fördereinheiten erfolgen.

Für die Qualität der produzierten stabförmigen Rauchartikel ist bereits die Aufbereitung in Form von Auflockerung und Dosierung in der eingangs erwähnten Tabakverteilvorrichtung von maßgeblicher Bedeutung.

In der Tabakverteilvorrichtung wird der Tabak einer Fördereinheit durch Tabakversorgungseinheit zur Verfügung gestellt, von der Fördereinheit mittels des Fördergurtes zu einer Tabakaufbereitungseinheit transportiert und schließlich nach Passieren der Tabakaufbereitungseinheit an die Strangeinheit übergeben.

Der Transport des Tabaks mittels des Fördergurtes findet zur kontinuierlichen TabakVersorgung dauerhaft statt. Hierdurch entsteht allerdings naturgemäß ein Verschleiß des Fördergurtes, sodass dieser gewechselt werden muss. Ein solcher Wechsel muss auch direkt vor Ort durch das Personal durchgeführt werden können, um Stillstandzeiten zu verkürzen. Gleichzeitig ist darauf zu achten, dass die gesamte Maschine zur Herstellung von stabförmigen Rauchartikeln platzsparend aufgebaut ist, und somit insbesondere auch die Tabakverteilvorrichtung ausreichend kompakt gestaltet ist.

Aus dem Stand der Technik ist es bekannt, zum Wechseln des Förderergurts zunächst die Fördereinheit aus der Tabakverteilvorrichtung zusammen mit einer Tabakspeichereinheit herauszuschwenken und auszubauen und anschließend noch die Fördereinheit selbst, beispielsweise einen Steilförderer, aus der Tabakspeichereinheit herauszuschwenken und auszubauen.

Aus der deutschen Offenlegungsschrift DE 103 44 317 A1 ist zur Lösung dieses Problems vorgeschlagen, die Tabakverteilvorrichtung modular aufzubauen, sodass die Fördereinheit aus der Tabakverteilvorrichtung herausgeschoben werden kann.

Auf die herausgeschobene oder ausgebaute Fördereinheit kann dann ein neuer Fördergurt gespannt werden. Die Fördergurte sind hierbei, um eine ausreichende Stabilität zu garantieren, an ihrer Nahtstelle zu einem geschlossenen Fördergurt verschweißt.

Die Beweglichkeit der Fördereinheit muss allerdings konstruktiv berücksichtig werden, sodass zum Erzielen der gleichen Stabilität der Tabakverteilvorrichtung im Vergleich zu Tabakverteilvorrichtung mit unbeweglichen oder nicht komplett ausbaubaren Fördereinheiten Verstärkungen notwendig sind.

Zudem sind möglicherweise mit Hydrauliköl versehene Hydraulikvorrichtungen notwendig, um eine Bewegung der Fördereinheit überhaupt erst möglich zu machen. Die Verwendung von Hydrauliköl in Maschinen zur Herstellung von konsumierbaren Produkten stellt zudem ein Kontaminationsrisiko dar.

Ausgehend hiervon liegt der vorliegenden Erfindung die Aufgabe zugrunde, eine Tabakverteilvorrichtung und ein Verfahren zum Einsetzen eines Fördergurtes in eine Fördereinheit einer Tabakverteilvorrichtung anzugeben, wobei ein einfacher, stabiler und kompakter Aufbau der Tabakverteilvorrichtung erzielt werden kann und gleichzeitig das Auswechseln des Gurtes einfach zu handhaben ist.

Gemäß einer ersten Lehre der Erfindung wird die Aufgabe dadurch gelöst, dass der Fördergurt zwei durch eine Unterbrechung quer zur Förderrichtung gebildete Fördergurtenden und ein Schloss zur Verbindung der zwei Fördergurtenden durch Formschluss aufweist.

Dass der Fördergurt eine Unterbrechung quer zur Förderrichtung aufweist, bedeutet, dass der Fördergurt in seiner Breite quer zur Förderrichtung durch die Unterbrechung zertrennt ist oder zumindest einmal zertrennt war.

Unter der Förderrichtung wird die Richtung in der Ebene des Fördergurtes angesehen, in welche sich der Fördergurt zum Fördern des Tabaks bewegt.

Dass der Fördergurt quer zu dieser Förderrichtung unterbrochen sein muss, bedeutet nicht, dass die Unterbrechung selbst zwangsweise ausschließlich quer zur Fördererrichtung verlaufen darf. Vielmehr kann die Unterbrechung beispielsweise auch in einem Sägezahn- oder Zickzack-Muster verlaufen. Ausschlaggebend ist hierbei lediglich, dass der Fördergurt zumindest eine Unterbrechung aufweist, welche von Rand zu Rand des Förderbandes verläuft.

Durch die Unterbrechung, welche aus einem "endlosen", umlaufenden Fördergurt einen Fördergurt mit zwei Fördergurtenden macht, ist der Fördergurt in die Fördereinheit der Tabakverteilvorrichtung einsetzbar, ohne dass die Fördereinheit aus der Tabakverteilvorrichtung ausgebaut zu werden braucht. Der Fördergurt kann nämlich mit einem Fördergurtende in die Fördereinheit eingefädelt oder eingezogen werden, bis der Fördergurt an der vorgesehenen Position in der Fördereinheit sitzt.

Anschließend können die zwei Fördergurtenden des Fördergurtes mithilfe des Schlosses durch Formschluss verbunden werden.

Auf diese Weise entsteht dann aus dem eine Unterbrechung aufweisenden Fördergurt mit zwei Fördergurtenden ein "endloser", umlaufender Fördergurt. Da auf ein Ausbauen, Verschieben oder Ausschwenken der Fördereinheit verzichtet werden kann, ist ein besonders einfacher, stabiler und kompakter Aufbau der Tabakverteilvorrichtung möglich. Die Fördereinheit ist also ortsfest, beispielsweise innerhalb eines gemeinsamen Rahmens oder Gehäuses, mit der Tabakversorgungseinheit und der Tabakaufbereitungseinheit verbunden und braucht für ein Auswechseln des Förderbandes nicht relativ zu der Tabakversorgungseinheit und der Tabakaufbereitungseinheit bewegt werden. Gleichzeitig kann die Auswechselbarkeit des Fördergurtes weiterhin gewährleistet werden und insbesondere eine vereinfachte Handhabung ermöglicht werden, da zahlreiche aufwendige Schritte wie ein Aus- und Einbau der Fördereinheit gar nicht notwendig sind.

Überraschenderweise wurde zudem festgestellt, dass das Vorsehen eines Schlosses an oder in dem Fördergut, was unter Umständen gewisse punktuelle Unebenheiten oder Unregelmäßigkeit im Fördergurt hervorrufen kann, die Tabakversorgung bzw. - verteilung für darauffolgende Verarbeitungsschritte nicht oder in zu vernachlässigendem Ausmaß beeinflusst.

Unter einer formschlüssigen Verbindung ist eine Verbindung zu verstehen, bei der bedingt durch die geometrische Form von Komponenten die Bewegung in die relevante Richtungen gesperrt wird, im vorliegenden Fall die Bewegung der beiden Fördergurtenden des Fördergurtes voneinander weg.

Insofern wird unter einem Schloss ein Verriegelungsmechanismus verstanden, welcher die beiden Fördergurtenden miteinander verbindet.

Unter einer Tabakversorgungseinheit wird der Bereich der Tabakverteilvorrichtung verstanden, welcher der Fördereinheit den mittels des Fördergurtes der Fördereinheit zu transportierenden Tabak zur Verfügung stellt. Eine solche Tabakversorgungseinheit kann insbesondere eine Tabakzufuhrschleuse, eine Dosierwalze, einen Auffangbehälter und/oder eine Überflussrücklauf aufweisen.

Ist eine Tabakzufuhrschleuse vorgesehen, kann die Zufuhr des Tabaks maschinell gesteuert und grob dosiert werden, ohne dass von außen darauf geachtet werden muss, wann wie viel Tabak zugeführt wird.

Ist eine Dosierwalze vorgesehen, wird der Tabak bereits vor der Beförderung mittels des Fördergurtes der Fördereinheit aufgelockert.

Ist ein Auffangbehälter vorgesehen, kann ein Reservoir an Tabak bereitgestellt werden, aus welchem das Förderband direkt Tabak entnehmen kann. In diesen Auffangbehälter kann weiterhin ein Überflussrücklauf münden, welcher überschüssigen Tabak aus dem weiteren Verarbeitungsprozess wieder in die Tabakversorgungseinheit befördert.

Unter einer Fördereinheit mit einem Fördergurt wird der Bereich der Tabakverteilvorrichtung verstanden, welche den Tabak von der Tabakversorgungseinheit mittels des Fördergurtes zur Tabakaufbereitungseinheit bringt. Die Fördereinheit weist insbesondere Mittel zum Bewegen des Fördergurtes auf. Zum Antrieb des Fördergurtes können beispielsweise Förderwalzen oder Förderrollen vorgesehen sein, welche das umlaufende Förderband in Förderrichtung bewegen können. Die Mittel zum Bewegen des Fördergurtes sind insbesondere dazu geeignet, den Fördergurt kontinuierlich mit konstanter Geschwindigkeit zu bewegen.

Die Fördereinheit ist vorzugsweise ein Steilförderer. Dieser transportiert den Tabak nicht nur in horizontaler Richtung, sondern unter einem steilen Förderwinkel auch in vertikaler Richtung. Dabei sind Winkel von über 45°, insbesondere über 60° und bevorzugt über 70° gegenüber der Horizontalen vorgesehen. Dadurch kann eine besonders kompakte Bauweise der Tabakverteilvorrichtung erreicht werden. Dabei kann der Fördergurt auch so in der Fördereinheit positioniert werden, dass mehrere Förderwinkel während des Transports durchlaufen werden.

Unter einer Tabakaufbereitungseinheit wird der Bereich der Tabakverteilvorrichtung verstanden, welcher nach der Beförderung mittels des Fördergurts der Fördereinheit den Tabak weiteren Aufbereitungsschritten unterzieht. In der Tabakaufbereitungseinheit können insbesondere ein Stauschacht, Dosierwalzen, Sortierwalzen und/oder eine Übergabeeinheit vorgesehen sein.

Sind ein Stauchschacht, Dosierwalzen und/oder Sortierwalzen vorgesehen, kann die Aufbereitung des Tabaks weiter verbessert und kontrolliert werden. Da für die Aufbereitung und insbesondere das Sichten mittels dieser Komponenten bevorzugt durch die Schwerkraft bedingte Effekte oder Trägheitseffekte verwendet werden, ist die Verwendung dieser Komponenten besonders in Kombination mit einem Steilförderer bevorzugt, da der Tabak zuvor mittels des Steilförderers auf eine ausreichende Höhe transportiert werden kann.

Mittels einer Übergabeeinheit kann der Tabak schließlich aufbereitet an einen Saugstrangförderer übergeben werden.

Wie zu erkennen ist, können zahlreiche Komponenten in der Tabakverteilvorrichtung vorgesehen sein. Gerade bei einer hohen Anzahl an Komponenten ist die die Verwendung eines erfindungsgemäßen Fördergurts besonders vorteilhaft, da so bei der komplexen Anordnung der Komponenten nicht noch zusätzlich darauf Rücksicht zu nehmen ist, dass die Fördereinheit ausgebaut werden können muss. Insofern kann mittels der erfindungsgemäßen Tabakverteilvorrichtung erreicht werden, dass, auch wenn zahlreiche Komponenten der Tabakversorgungseinheit, der Fördereinheit und der Tabakaufbereitungseinheit vorgesehen sind, ein einfaches Auswechseln des Fördergurts weiterhin gewährleistet werden kann und ein besonders einfacher, stabiler und kompakter Aufbau der Tabakverteilvorrichtung ermöglicht wird. Dieser kompakte Aufbau zeichnet sich dadurch aus, dass der Fördergurt ohne Bewegung der Fördereinheit relativ zu der Tabakversorgungseinheit und der Tabakaufbereitungseinheit ausgewechselt werden kann. Die innerhalb eines gemeinsamen Gehäuses oder Gestells angeordneten Einheiten der Fördereinheit, der Tabakversorgungseinheit und der Tabakaufbereitungseinheit können ortsfest zueinander angeordnet und befestigt sein.

Dass der Fördergurt eine Unterbrechung quer zur Förderrichtung aufweist, schließt nicht aus, dass der Fördergurt auch mehrere Unterbrechungen aufweisen kann. Diese können dann beispielsweise ebenfalls mittels eines Schlosses überbrückt werden.

Dass das Schloss die Fördergurtenden des Fördergurtes mittels Formschluss verbindet, schließt nicht aus, dass zusätzlich auch weitere Arten der Verbindung, beispielsweise Kraftschluss oder Materialschluss, vorgesehen sein können, welche die formschlüssige Verbindung des Schlosses unterstützen.

Die formschlüssige Verbindung kann insbesondere durch einen Reißverschluss, einen Klettverschluss, durch Haken und Ösen, durch eine Naht, durch Druckknöpfe oder durch andere Verriegelungsmechanismen erreicht werden. Auch können Kombinationen dieser Mechanismen verwendet werden. Die formschlüssige Verbindung ist bevorzugt reversibel, d.h. sie kann wieder gelöst werden.

Das Schloss weist somit einen geöffneten und einen geschlossenen Zustand auf. Im geöffneten Zustand des Schlosses ergibt sich so durch die Unterbrechung quer zur Förderrichtung ein Fördergurt mit zwei Fördergurtenden. Im geschlossenen Zustand des Schlosses sind die zwei Fördergurtenden zumindest durch Formschluss miteinander verbunden und es entsteht ein umlaufender Fördergurt.

Weist das Schloss zwei Laschen auf, welche jeweils an einem Ende des Fördergurtes befestigt sind, kann ein Schloss besonders einfach und flexibel an Fördergurten vorgesehen werden. Die erste Lasche ist also mit dem ersten Fördergurtende befestigt und die zweite Lasche ist mit dem zweiten Fördergurtende befestigt. Somit können insbesondere bereits verfügbare Fördergurte verwendet werden, welche mit einer Durchtrennung versehen werden bzw. bei der Herstellung nicht bereits zu einem umlaufenden Fördergurt verschweißt werden.

Die Laschen können beispielsweise bereits bei der Produktion des Fördergurtes in diesen eingearbeitet werden. Auch können die Laschen an die Fördergurtenden auf Stoß oder überlappend angeklebt oder angenäht sein oder mit den Fördergurtenden auf Stoß oder überlappend verschweißt sein. So müssen nicht die Fördergurtenden selbst etwaige Mittel zur Bildung eines Schlosses aufweisen, sondern können mithilfe der Laschen an den Gurtenden angebracht werden.

Die Laschen können um die Materialeigenschaften des Fördergurtes zu erreichen, vorteilhafterweise aus dem gleichen Material, wie der Fördergurt selbst hergestellt sein.

Die Laschen können dann beispielsweise überlappend oder auf Stoß formschlüssig miteinander verbunden werden, sodass diese die zwei Fördergurtenden formschlüssig miteinander verbinden. Bei einer Verbindung auf Stoß entsteht vorteilhaft keine Verdickung an der Verbindungsstelle des Fördergurtes.

Die Laschen haben insbesondere die gleiche Breite quer zur Förderrichtung des Fördergurtes, um eine besonders stabile Verbindung sowohl zwischen den Laschen als auch zwischen der Lasche und dem jeweiligen Fördergurtende, mit dem die Lasche fest verbunden ist, zu erreichen.

Es ist allerdings auch denkbar, lediglich eine an einem Fördergurtende befestigte Lasche vorzusehen. Diese ist dann nicht mit der zweiten Lasche sondern direkt mit dem zweiten Fördergurtende formschlüssig zu verbinden.

Es ist weiterhin bevorzugt, wenn die Laschen des Schlosses aneinander angepasste Konturen, insbesondere in Form einer eine Verzahnung, aufweisen. Dadurch kann eine besonders hohe Dichtigkeit des Schlosses, beispielsweise gegenüber Tabakstaub, insbesondere bei einer Anordnung der Laschen bzw. Fördergurtenden auf Stoß, erreicht werden. Auch beim Erzeugen einer formschlüssigen Verbindung, beispielsweise mittels eines Reißverschlusses, vereinfacht eine entsprechend angepasst Kontur die Verbindung der Fördergurtenden bzw. das Schließen des Schlosses. Weiterhin kann durch die angepassten Konturen auch eine Art Anschlag für die Laschen in Förderrichtung erzeugt werden, sodass eine Ausrichtung der Laschen erleichtert wird.

Die Ausbildung der angepassten Konturen in Form einer Verzahnung ist weiterhin vorteilhaft. Hierbei greifen die Laschen in Förderrichtung ineinander ein. Wenn zum Beispiel für das Schloss lineare Verriegelungselemente, wie Stangen, Stifte oder Bolzen vorgesehen sind, können die Verriegelungselement dann trotz einer geradlinigen Beschaffenheit mit den Laschen abwechselnd wechselwirken. Auch können durch eine geradlinig verlaufende Naht die Laschen miteinander verbunden werden.

Es ist ebenfalls denkbar, dass falls keine oder nur eine Lasche vorgesehen ist, die Fördergurtenden bzw. das Fördergurtende die aneinander angepassten Konturen aufweisen.

Weist das Schloss ein Verriegelungselement und die zwei Laschen jeweils eine Aufnahme für das Verriegelungselement auf, kann auf besonders einfache Weise ein Schloss für eine stabile formschlüssige Verbindung der Fördergurtenden bereitgestellt werden. Das Verriegelungselement wird hierbei beispielsweise seitlich, also quer zur Förderrichtung, in die Aufnahmen geschoben, welche eine Bewegung des Verriegelungselements gegenüber den Aufnahmen und somit der Laschen zueinander zumindest in und gegen die Förderrichtung verhindert. Die Aufnahmen können beispielsweise als quer durch die Laschen verlaufenden Durchgänge, insbesondere lineare Durchgänge, ausgebildet sein.

Weisen die Laschen eine Kontur in Form einer Verzahnung auf, können auch die einzelnen Durchgänge durch die einzelnen Zähne der Verzahnung eine Aufnahme in diesem Sinne bilden. Hierbei kann besonders vorteilhaft mittels Hindurchschiebens eines einzigen linearen Verriegelungselements eine formschlüssige Verbindung zwischen den Laschen geschaffen werden.

Auch hier ist weiterhin denkbar, dass falls keine oder nur eine Lasche vorgesehen ist, die Fördergurtenden bzw. das Fördergurtende die Aufnahmen aufweisen.

Ein schnelles und einfaches Schließen des Schlosses, d.h. das Erzeugen der formschlüssigen Verbindung wird dadurch erzielt, dass als Verriegelungselement ein Stift, vorzugsweise aus Plastik oder Federstahl, vorgesehen ist. Aufgrund der linearen Ausbildung kann ein Stift besonders einfach und in eine entsprechende Aufnahme der Laschen oder Fördergurtenden eingeschoben und auch wieder entfernt werden, um das Schloss zu öffnen. Insbesondere in Kombination mit einer als Verzahnung ausgebildeten Kontur der Laschen bzw. Fördergurtenden ist dies vorteilhaft.

Alternativ kann dass Schloss auch als ein Reißverschluss ausgebildet sein oder einen aufweisen. Hierdurch kann ein besonders einfaches wiederholtes Öffnen und Schließen des Schlosses ermöglicht werden. Die sich entsprechenden Reißverschlusskonturen können hierbei sowohl über Laschen an den Fördergurtenden als auch direkt mit diesen befestigt sein.

Weist der Fördergurt eine Abdeckung auf, wobei die Abdeckung das Schloss zumindest einseitig und zumindest teilweise überdeckt, kann die Gefahr, dass Staub, insbesondere Tabakstaub, unter den Fördergurt gelangt, weiter minimiert werden. Auf diese Weise können die Mittel zum Bewegen des Fördergurtes geschützt werden. Zudem wird ein eventueller Einfluss auf die Tabakversorgung bzw. -verteilung für nachfolgende Verarbeitungsschritte durch eine gleichmäßigere Fördergurtoberfläche im Bereich des Schlosses minimiert.

Die Abdeckung kann insbesondere aus dem gleichen Material wie der Fördergurt selbst hergestellt sein. Die Abdeckung kann dabei als eine Art Lasche im Bereich eines Fördergurtendes mit dem Fördergurt verbunden sein, beispielsweise mit diesem verschweißt oder vernäht sein. Bevorzugt deckt die Abdeckung das Schloss vollständig ab. Ebenfalls ist es möglich, mehr als eine Abdeckung oder auch Abdeckungen sowohl auf der Oberseite als auch auf der Unterseite des Fördergurtes oder an beiden Fördergurtenden vorzusehen.

Bevorzugt weist der Fördergurt Kunststofffasern auf. Auf diese Weise kann ein besonders stabiler Fördergurt vorgesehen und zudem gute Fördereigenschaften in Bezug auf den Transport von Tabak erreicht werden.

Gemäß einer weiteren Ausgestaltung der erfindungsgemäßen Vorrichtung ist der Fördergurt aus einem mehrlagigen Verbundwerkstoff hergestellt. Dadurch kann insbesondere die Stabilität und Verschleißfestigkeit des Fördergurtes gesteigert werden. Zudem kann durch lokales Entfernen von einzelnen Lagen beispielsweise die Verbindung zwischen den Fördergurtenden und den aus dem gleichen Werkstoff hergestellten Laschen oder Abdeckungen ohne oder mit reduzierten lokalen Verdickungen ermöglicht werden.

Verbindet das Schloss die Fördergurtenden weiterhin durch Stoffschluss, insbesondere durch einen Kleber, miteinander, wird zum einen die Stabilität der Verbindung weiterhin erhöht und zum anderen kann eine noch bessere Dichtigkeit des Schlosses, beispielsweise gegen Tabakstaub, erreicht werden. Hierbei werden beispielsweise lediglich die Laschen durch Kleber miteinander verbunden, während die Laschen durch eine beliebige Verbindung mit den Fördergurtenden verbunden sein können. Wie bereits ausgeführt, können weiterhin auch nur eine Lasche oder keine Lasche vorgesehen sein und auch in diesem Fall die Fördergurtenden beispielsweise direkt über Formschluss und Stoffschluss miteinander verbunden sein.

Besonders vorteilhaft ist die Verwendung eines flexiblen Klebers, sodass die Biegungen und Belastungen des Fördergurtes beispielweise während des Umlaufs um die Förderwalzen die Verklebung nicht beschädigen. Zudem oder alternativ kann der Kleber ein UV-beständiger Kleber sein, um die Langlebigkeit der Klebverbindung zu steigern. Es kann beispielsweise ein Heißkleber verwendet werden. Alternativ oder zusätzlich kann auch ein Aufschmelzen der Laschen bzw. der Fördergurtenden erfolgen, um einen Stoffschluss zu erzeugen.

Der Fördergurt weist bevorzugt eine Breite zwischen 0,6 m und 1,8 m, insbesondere zwischen 1,0 m und 1,4 m, auf. Diese Fördergurtbreiten sind besonders für die Fördereinheiten in Tabakverteilvorrichtungen geeignet. Es hat sich herausgestellt, dass bei dieser Breite des Fördergurtes eine optimale Verteilung und Aufbereitung des Tabaks für nachfolgende Verarbeitungsschritte in der Tabakverteilvorrichtung erfolgen kann, und zudem bei diesen Breiten ein Schloss zur Verbindung der zwei Fördergurtenden durch Formschluss realisiert werden kann. Bei geringeren Breiten müssten beispielsweise mehrere Fördergurte nebeneinander verwandt werden, was wiederum zu unerwünschten Lücken im Fördergurt der Fördereinheit führen würde, während noch breitere Fördergurte zum einen die Kompaktheit der Tabakverteilvorrichtung negativ beeinflussen und zum anderen den Aufwand insbesondere zum Schließen eines Schlosses durch Formschluss stark erhöhen würden. Insofern haben sich die genannten Breiten als optimale Breiten des Fördergurts herausgestellt.

Weiterhin bevorzugt ist es, wenn der Fördergurt einen einseitigen sich in Förderrichtung erstreckenden Keil zur Führung aufweist. Damit kann verhindert oder die Gefahr verringert werden, dass sich der Fördergurt während des Transports quer zur Förderrichtung verschiebt oder zu hohe Belastungen quer zur Förderrichtung erfährt. Dadurch kann die Haltbarkeit eines Schlosses zur Verbindung der zwei Fördergurtenden erhöht werden und die Abnutzung, insbesondere am Rand des Fördergurtes bzw. des Schlosses, verringert werden.

Ein solcher Keil ist insbesondere an der Unterseite bzw. Innenseite des Fördergurtes angeordnet, um die Förderung und die Verteilung des Tabaks, insbesondere entlang der Breite des Fördergurts, nicht zu beeinflussen. Die Antriebsmittel des Fördergurtes, beispielsweise die Antriebswalzen weisen dann eine an den Keil angepasste Ausnehmung auf, durch die der Keil und somit der Fördergurt geführt wird.

Bevorzugt ist ein solcher Keil zudem mittig bezogen auf die Breite des Fördergurtes angeordnet. Es ist allerdings auch möglich, den Keil seitlich versetzt oder zwei parallel verlaufende Keile am Fördergurt zur Führung vorzusehen.

Gemäß einer weiteren Ausgestaltung der erfindungsgemäßen Tabakverteilvorrichtung, weist der Fördergurt mindestens ein vom Fördergurt hervorstehendes Förderelement zum Transport des Tabaks auf. Dadurch kann die Förderung des Tabaks weiterhin verbessert werden. Ein Förderelement kann auch im Bereich des Schlosses vorgesehen sein, allerdings kann der Bereich des Schlosses auch frei von Förderelementen sein. Mit einem hervorstehenden Förderelement ist gemeint, dass das Förderelement auf der Außenseite bzw. Oberseite des Fördergurts, welche den Tabak transportiert, angeordnet ist und auf dieser Seite eine Erhebung bildet. Das Förderelement kann hierbei unterschiedliche geometrische Formen aufweisen, beispielsweise noppenförmig oder kammförmig ausgebildet sein. Bevorzugt ist das Förderelement länglich ausgebildet und quer zur Förderrichtung ausgerichtet. Es können insbesondere auch mehrere Förderelemente, bevorzugt in im Wesentlichen regelmäßigen Abständen, vorgesehen sein. Insbesondere bei steilen Förderwinkeln, wie sie bei einem Steilförderer vorzufinden sind, verbessern Förderelemente den Transport des Tabaks.

Gemäß einer zweiten Lehre der Erfindung wird die Aufgabe auch durch ein Verfahren zum Einsetzen eines Fördergurtes in eine Fördereinheit einer Tabakverteilvorrichtung, insbesondere eine erfindungsgemäße Tabakverteilvorrichtung, gelöst. Dabei wird ein einzubringender Fördergurt mit zwei durch eine Unterbrechung quer zur Förderrichtung gebildeten Fördergurtenden und mit einem Schloss zur Verbindung der zwei Fördergurtenden in die Fördereinheit mit geöffnetem Schloss eingebracht und das Schloss des eingebrachten Fördergurts in der Fördereinheit geschlossen.

Dadurch, dass der Fördergurt mit geöffnetem Schloss in die Fördereinheit eingebracht wird, muss die Fördereinheit nicht aufwendig mit zahlreichen Schritten aus der Tabakverteilvorrichtung ausgebaut werden. Vielmehr kann die Fördereinheit in der Tabakverteilvorrichtung belassen werden und dadurch, dass das Schloss des Fördergurtes geöffnet ist, kann der Fördergurt in die Fördereinrichtung beispielsweise eingefädelt, eingeschoben oder eingezogen werden. Hierdurch kann ein einfacher, stabiler und kompakter Aufbau der Tabakverteilvorrichtung erzielt werden, da kein Ausbauen, Verschieben oder Ausschwenken der Fördereinheit ermöglicht werden muss und dies bei der Anordnung weiterer Komponenten in der Tabakverteileinrichtung nicht berücksichtigt werden muss. Gleichzeitig ist ein Auswechseln des Gurtes durch das Einbringen mit geöffnetem Schloss einfach zu handhaben.

Unter geöffnetem Schloss wird verstanden, dass die Fördergurtenden des Fördergurtes nicht mittels des Schlosses miteinander verbunden sind. Im Rahmen des erfindungsgemäßen Verfahrens muss das Schloss nicht notwendigerweise eine formschlüssige Verbindung ermöglichen, eine ausschließlich materialschlüssige Verbindung ist beispielsweise ebenfalls möglich.

Ist der Fördergurt in die Fördereinheit der Tabakverteileinheit eingebracht, kann durch Schließen des Schlosses mit dem Fördergurt ein "endlos" umlaufender Fördergurt zur Verfügung gestellt werden.

Befindet sich vor dem Einbringen des einzubringenden Fördergurts bereits ein auszutauschender Fördergurt in der Fördereinheit, kann dieser entweder zuvor oder im Rahmen des Einbringens des neuen, einzubringenden, zweiten Fördergurts entfernt werden.

Der auszutauschende Fördergurt kann dabei beispielsweise durch Öffnen des Schlosses gelöst und daraufhin entfernt werden. Weist der auszutauschende Fördergurt kein Schloss auf bzw. ist das Schloss nicht zu öffnen, da es beispielsweise durch eine materialschlüssige Verbindung geschlossen wurde, kann der auszutauschende Fördergurt auch zertrennt, beispielsweise zerschnitten werden.

Es ist besonders bevorzugt, wenn der noch geöffnete einzubringende Fördergurt vor dem Entfernen des auszutauschen Fördergurts an dem auszutauschenden Fördergurt befestigt wird. Dadurch kann der einzubringende Fördergurt mittels des auszutauschenden Fördergurts in die Fördereinheit eingezogen werden. Dabei wird der auszutauschende Fördergurt entfernt, während der einzubringende Fördergurt eingebracht wird. So kann das Einbringen des einzubringenden Fördergurts vereinfacht und beschleunigt werden. Ein Befestigen der Fördergurte kann beispielsweise über ein Einhaken oder Festklemmen der Fördergurte miteinander realisiert werden.

Verbindet das Schloss des einzubringenden Fördergurts die zwei Fördergurtenden des einzubringenden Fördergurts durch Stoffschluss, können die zwei Fördergurtenden direkt oder indirekt, beispielsweise über Laschen, dauerhaft und besonders effektiv miteinander verbunden werden. Zum Entfernen dieses Fördergurtes muss dieser dann aufgeschnitten oder die Klebeverbindung wieder gelöst oder aufgeschmolzen werden.

Es ist bevorzugt, wenn das Schloss des einzubringenden Fördergurts die zwei Fördergurtenden des einzubringenden Fördergurts durch Formschluss verbindet. Dadurch kann eine Verbindung der beiden Fördergurtenden auch ohne chemische Substanzen wie Kleber und ohne Wartezeiten für eine eventuelle Aushärtung realisiert werden. Realisiert das Schloss die Verbindung mittels Formschlusses, kann das Schloss zudem in der Regel auch wieder geöffnet werden. Es ist aber auch denkbar, zusätzlich zu der formschlüssigen Verbindung eine stoffschlüssige Verbindung zur Abdichtung des Schlosses und zur erhöhten Stabilität vorzusehen.

Für weitere Vorteile und Ausgestaltungen eines Schlosses zur Verbindung der Fördergurtenden mittels Formschluss wird zusätzlich auf die Beschreibung in Bezug auf die erfindungsgemäße Vorrichtung verwiesen.

Gemäße einer weiteren Ausgestaltung des erfindungsgemäßen Verfahrens wird ein auszutauschender Fördergurt mit zwei durch eine Unterbrechung quer zur Förderrichtung gebildeten Fördergurtenden und mit einem Schloss zur Verbindung der zwei Fördergurtenden entfernt, wobei der auszutauschende in der Fördereinheit befindliche Fördergurt dadurch entfernt wird und der einzubringende Fördergurt mit geöffnetem Schloss in die Fördereinheit dadurch eingebracht wird, dass das Schloss des auszutauschenden in der Fördereinheit befindlichen Fördergurts geöffnet wird, dass ein Fördergurtende des einzubringende Fördergurts an ein Fördergurtende des auszutauschenden Fördergurtes mittels der Schlösser befestigt wird und dass der einzubringende Fördergurt mittels des auszutauschenden Fördergurtes in die Fördereinheit eingezogen wird.

Hierbei kann besonders vorteilhaft das Schloss zum einfachen und schnellen Einsetzen eines Fördergurtes genutzt werden. Da bei gleichen Fördergurten die Schlösser miteinander kompatibel sind, ist es möglich ein Fördergurtende des auszutauschenden noch in der Fördereinheit befindlichen Fördergurts mit einem Ende des einzubringenden Fördergurts mittels des Schlosses zu verbinden. Durch den Formschluss kann so der einzubringende Fördergurt mittels des auszutauschenden Fördergurtes in die Fördereinheit eingezogen werden. Ist der einzubringende Fördergurt in die Fördereinheit eingebracht, kann die formschlüssige Verbindung zwischen den beiden Fördergurten wieder gelöst werden. Daraufhin kann das Schloss des eingebrachten Fördergurtes geschlossen werden.

Dass der einzubringende Fördergurt an einem Fördergurtende des auszutauschenden Fördergurtes mittels der Schlösser befestigt wird, bedeutet also, dass hierbei jeweils eine "Schlosshälfte" der Fördergurte verwendet wird.

Im Folgenden soll die Erfindung anhand von Ausführungsbeispielen, welchen weitere Vorteile und Merkmale zu entnehmen sind, erläutert werden, wobei auf die beigefügte Zeichnung Bezug genommen wird.

In der Zeichnung zeigen
- Fig. 1: ein Ausführungsbeispiel einer erfindungsgemäßen Tabakverteilvorrichtung in einer Schnittansicht,
- Fig. 2: ein Ausführungsbeispiel eines Fördergurtes einer erfindungsgemäßen Tabakverteilvorrichtung in perspektivischer Ansicht,
- Fig. 3: eine vergrößerte Darstellung des Schlosses des Fördergurtes aus Fig. 2 in geöffnetem Zustand,
- Fig. 4: das Schloss aus Fig. 3 in geschlossenen Zustand,
- Fig. 5: das Schloss aus Fig. 4 mit einer zusätzlichen materialschlüssigen Verbindung,
- Fig. 6: das Schloss aus Fig. 4 mit einer Abdeckung,
- Fig. 7: eine weiteres Ausführungsbeispiel eines Fördergurtes,
- Fig. 8: ein weiteres Ausführungsbeispiel eines Schlosses und
- Fig. 9: ein weiteres Ausführungsbeispiel eines Schlosses.

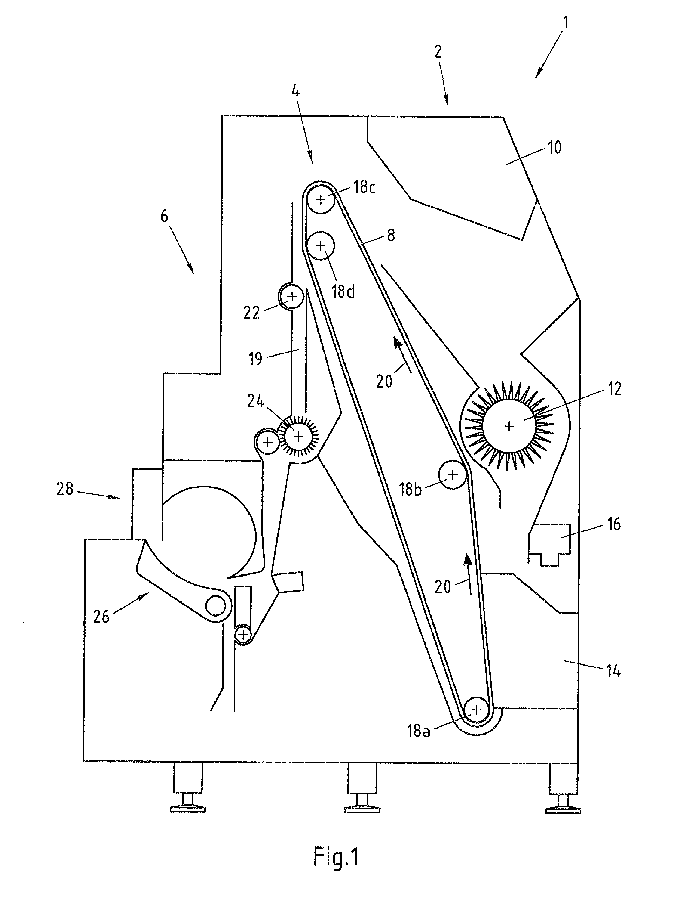

Fig. 1 zeigt ein Ausführungsbeispiel einer erfindungsgemäßen Tabakverteilvorrichtung 1 als einen Teil einer nicht weiter dargestellten Zigarettenherstellungsmaschine in einer Schnittansicht. Die Tabakverteilvorrichtung 1 weist eine Tabakversorgungseinheit 2, eine Fördereinheit 4, und eine Tabakaufbereitungseinheit 6 auf. Die Fördereinheit 4 weist des Weiteren einen in der Fördereinheit 4 angeordneten umlaufenden Fördergurt 8 auf.

Über eine Tabakzufuhrschleuse 10 wird Tabak periodisch oder kontinuierlich, insbesondere automatisiert, von außen der Tabakverteilvorrichtung 1 zugeführt. In der Regel hat zu diesem Zeitpunkt bereits eine Breitenverteilung des Tabaks stattgefunden, als eine Verteilung quer zur Förderrichtung 20. Daraufhin fällt der Tabak auf eine Dosierwalze 12, welche den Tabak weiter nach unten in einen Auffangbehälter 14 befördert. Durch die Dosierwalze wird der Tabak bereits vor der Beförderung mittels des Fördergurtes 8 der Fördereinheit 4 aufgelockert. In dem Auffangbehälter kann ein Reservoir an Tabak bereitgestellt werden, aus welchem das Förderband 8 direkt Tabak entnehmen kann.

Zudem weist die Tabakversorgungseinheit 2 der Tabakverteilvorrichtung 1 einen Überflussrücklauf 16 auf, welcher in den Auffangbehälter 14 mündet. Überschüssiger Tabak aus dem späteren Verarbeitungsprozess kann hierüber wieder zurück in die Tabakversorgungseinheit 2 befördert werden.

In der Fördereinheit 4 wird der Tabak von der Tabakversorgungseinheit 2 mittels des Fördergurtes 8 zur Tabakaufbereitungseinheit 6 befördert. Die Fördereinheit 4 weist Mittel zum Bewegen des Fördergurtes 8 auf, im vorliegenden Ausführungsbeispiel sind die Förderwalzen oder Förderrollen 18a, 18b, 18c und 18d vorgesehen, welche den umlaufenden Fördergurt 8 in Förderrichtung, dargestellt durch Pfeile 20, bewegen können. Durch die Förderwalzen 18 wird der Fördergurt 8 kontinuierlich und mit konstanter Geschwindigkeit um die Förderwalzen 18 herum bewegt. Der Fördergurt 8 wird dabei durch die Förderwalzen 18 gespannt. Da die Förderwalzen 18 in der seitlichen Schnittansicht nicht auf einer Geraden liegen, können unterschiedlichen Steigungen des Förderbandes 8 realisiert werden. Im Bereich des Auffangbehälters 14 beträgt die Steigung zwischen 80° und 90°, insbesondere ca. 84°, gegenüber der Horizontalen. An der Förderwalze 18b ändert sich jedoch der Förderwinkel des Fördergurtes 8 und wird oberhalb der Dosierwalze 12 flacher, also kleiner als 80° gegenüber der Horizontalen.

Über die Förderwalzen 18c und 18d wird der Fördergurt erneut umgelenkt und zurück zur Förderwalze 18a geführt. Im Bereich der Förderwalzen 18c, 18d fällt der Tabak von dem Fördergurt 8 herunter in die Tabakaufbereitungseinheit 6. Zwar wurde der Tabak bereits in der Tabakversorgungseinheit 2 und der Fördereinheit 4 in gewissem Maße durch Auflockerung aufbereitet. Die Aufbereitung wird allerdings in der Tabakaufbereitungseinheit fortgeführt.

Die Tabakaufbereitungseinheit 6 umfasst einen Stauschacht 19, eine Sortierwalze 22, eine weitere Dosierwalze 24 und eine Übergabeeinheit 26. Der vom Fördergurt 18 herunterfallende Tabak passiert zunächst die Sortierwalze 22, welche unerwünschte Bestandteile im Tabak aussortiert. Der nicht von der Sortierwalze 22 aussortierte Tabak fällt in einen Stauschacht 19. Dieser kann bei einer bestimmten, in diesem angestauten Tabakhöhe automatisch geöffnet werden, beispielsweise mittels einer die Füllhöhe messenden Lichtschranke (nicht dargstellt). Daraufhin wird der Tabak mittels einer weiteren Dosierwalze 24, beispielsweise einer Nadelwalze, einer eine Gleitfläche aufweisenden Übergabeeinheit 26 zugeführt, sodass der Tabak schließlich aufbereitet an einen hier lediglich angedeuteten Saugstrangförderer 28 übergeben wird.

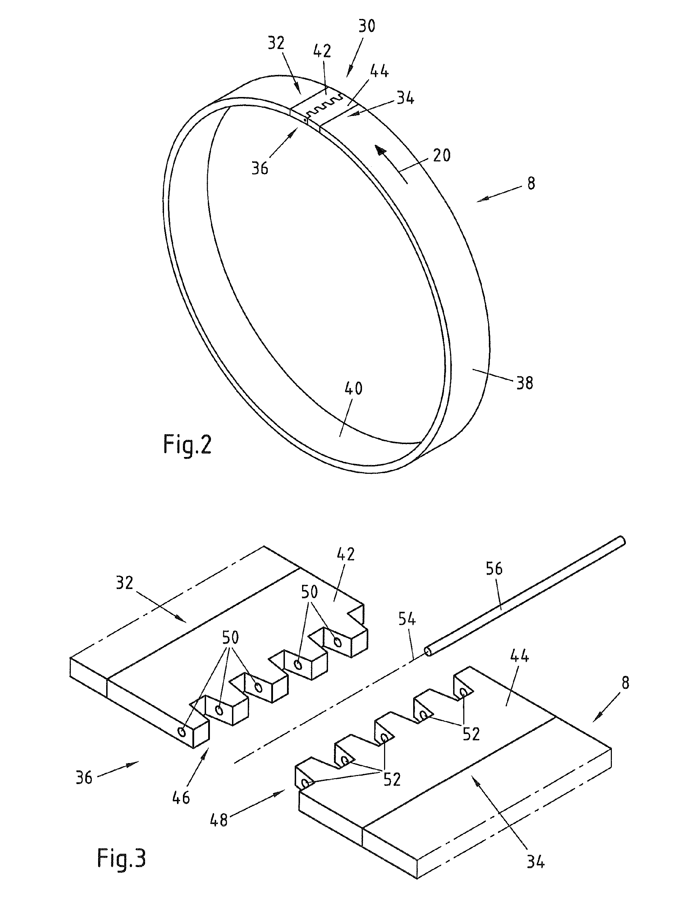

Fig. 2 zeigt ein Ausführungsbeispiel eines Fördergurtes 8 einer erfindungsgemäßen Tabakverteilvorrichtung, beispielsweise der Tabakverteilvorrichtung 1, in einer perspektivischen Ansicht. Der Fördergurt 8 ist ein umlaufender Fördergurt, welcher eine Unterbrechung 30 zwischen den beiden Fördergurtenden 32 und 34 aufweist. Zwischen den beiden Enden 32, 34 ist ein Schloss 36 vorgesehen, mittels welchem die beiden Fördergurtenden 32, 34 formschlüssig miteinander verbunden werden können. Der Fördergurt 8 weist eine Ober- oder Außenseite 38 und eine Unter- oder Innenseite 40 auf. Auf der Außenseite 38 wird der Tabak transportiert, während die Innenseite 40 mit den Förderwalzen 18 in Kontakt steht und auf diese Weise der Fördergurt 8 angetrieben wird.

Das Schloss 36 weist zwei Laschen 42 und 44 auf, welche jeweils mit einem entsprechenden Fördergurtende 32, 34 verbunden sind. Eine vergrößerte Darstellung des Schlosses 36 in geöffnetem Zustand ist in Fig. 3 dargestellt. Die Laschen 42, 44 sind an die Enden 32, 34 des Fördergurtes 8 auf Stoß angeklebt. Es ist allerdings gleichsam möglich, die Laschen 42, 44 mit Überlapp an die Enden 32, 34 anzukleben. Ebenfalls ist es möglich, die Laschen an die Enden 32, 34 anzuschweißen oder an diese anzunähen. Die Laschen 42, 44 weisen aneinander angepasste Konturen 46, 48 in Form einer Verzahnung auf. Werden die Laschen 42, 44 aufeinander zubewegt, kommt die Verzahnung 46, 48 in Eingriff und die Laschen 42, 44 überbrücken die Unterbrechung 30 des Fördergurtes 8.

Die Laschen 42, 44 weisen des Weiteren jeweils eine Aufnahme in Form von aufeinanderfolgenden koaxialen Durchgängen 50 bzw. 52 durch die Verzahnungen 46 bzw. 48 auf. Die Durchgänge 50 sind zudem zu den Durchgängen 52 koaxial angeordnet, wenn die Verzahnung 46, 48 in Eingriff steht. Die Durchgänge 50, 52 bilden dann im Wesentlichen entlang der Achse 54 einen durchgehenden Kanal. Das Verriegelungselement 56 kann dann durch alle Durchgänge 50, 52 geschoben werden. Das Verriegelungselement ist hier als gerader Stift ausgebildet. Allerdings ist auch denkbar, den Stift beispielsweise gebogen und/oder abgeflacht vorzusehen oder das Verriegelungselement als Band oder Schnur auszubilden. Vorliegend ist der Stift aus Federstahl gefertigt. Allerdings ist auch ein Verriegelungselement aus Kunststoff möglich.

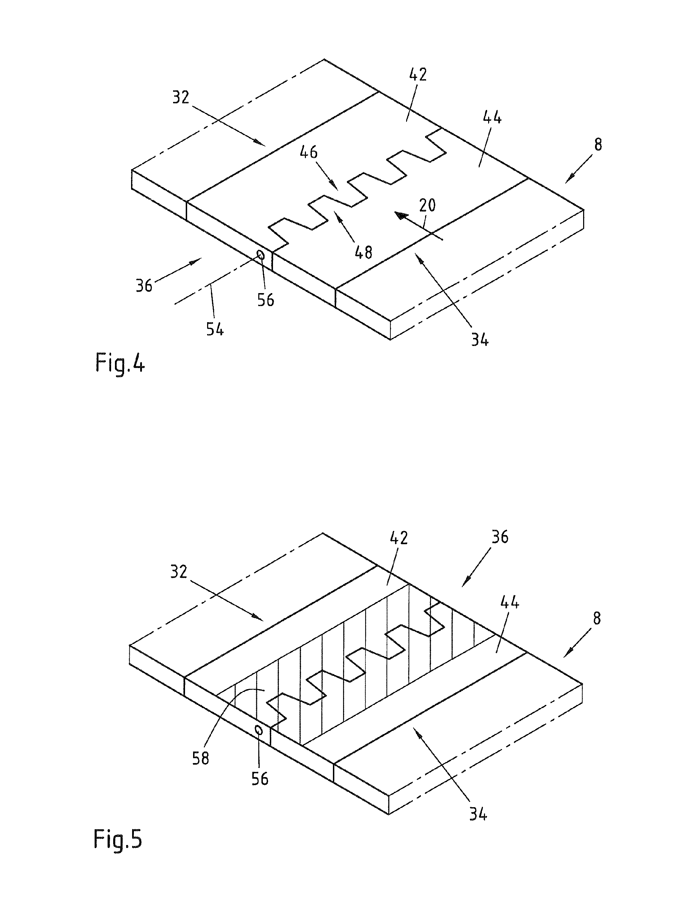

Der geschlossene Zustand des Schlosses 36, bei dem die Verzahnung 46, 48 in Eingriff ist und der Stift 56 durch die Durchgänge 50, 52 geschoben ist, ist in Fig. 4 dargestellt. Das Verrieglungselement wurde hierzu im Wesentlichen entlang der Achse 54 quer zum Fördergurt bzw. zur Förderrichtung 20 verschoben. Hierdurch erzeugt das Schloss 36 einen Formschluss, sodass eine Bewegung der Laschen 42, 44 und somit der Fördergurtenden 32, 34 voneinander weg blockiert ist.

In dem in Fig. 3 dargestellten geöffneten Zustand des Schlosses 36 des Fördergurtes 8 kann dieser in eine Fördereinheit, beispielsweise die Fördereinheit 4 eingebaut werden, ohne die Fördereinheit aus der Tabakverteilvorrichtung 1 auszubauen, heraus zu verschieben oder auszuschwenken, da dieser mit einem der Fördergurtenden 32 oder 34 in die Fördereinheit 4 eingeschoben, eingezogen oder eingefädelt werden kann. In der Fördereinheit 4 kann der Fördergurt 8 dann in den in Fig. 4 dargestellten geschlossenen Zustand des Schlosses 36 durch Zusammenbringen der Laschen 42, 44 und Einschieben des Stiftes 56 gebracht werden. Somit kann innerhalb der Tabakverteilvorrichtung 1 die Fördereinheit 4 ortsfest mit der Tabakversorgungseinheit 2 und der Tabakaufbereitungseinheit 6 verbunden sein, vorzugsweise über einen gemeinsamen Rahmen oder ein gemeinsames Gerüst. Der Fördergurt 8 kann also ohne Bewegung der Fördereinheit 4 relativ zu der Tabakversorgungseinheit 2 und der Tabakaufbereitungseinheit 6 ausgewechselt werden.

Fig. 5 zeigt das Schloss 36 aus Fig. 4 mit einer zusätzlichen materialschlüssigen Verbindung. Durch die formschlüssige Verbindung können im Bereich der als Verzahnung ausgebildeten Konturen 46, 48 der Laschen 42, 44 bei Zugbelastung des Fördergurtes 8 Schlitze entstehen. Durch diese Schlitze kann dann Tabak oder Tabakstaub ins Innere des Fördergurtes 8 in der Fördereinheit 4 gelangen. Dadurch können beispielsweise die Förderwalzen 18 beschädigt werden oder es muss zumindest häufiger eine Reinigung durchgeführt werden. Das in Fig. 5 dargestellte Schloss 36 aus der Fig. 4 ist dazu zusätzlich auf der Oberseite 38 mit einer Schicht 58 aus UV-beständigem, flexiblem Kleber überdeckt. Alternativ oder zusätzlich kann die Klebeschicht auch auf der Unterseite 40 im Bereich des Schlosses 36 vorgesehen sein. Der Kleber kann hierbei nur oberflächlich aufgetragen sein oder auch zwischen die Laschen 42, 44 gelangen. Alternativ ist auch eine materialschlüssige Verbindung mittels Schweißen möglich.

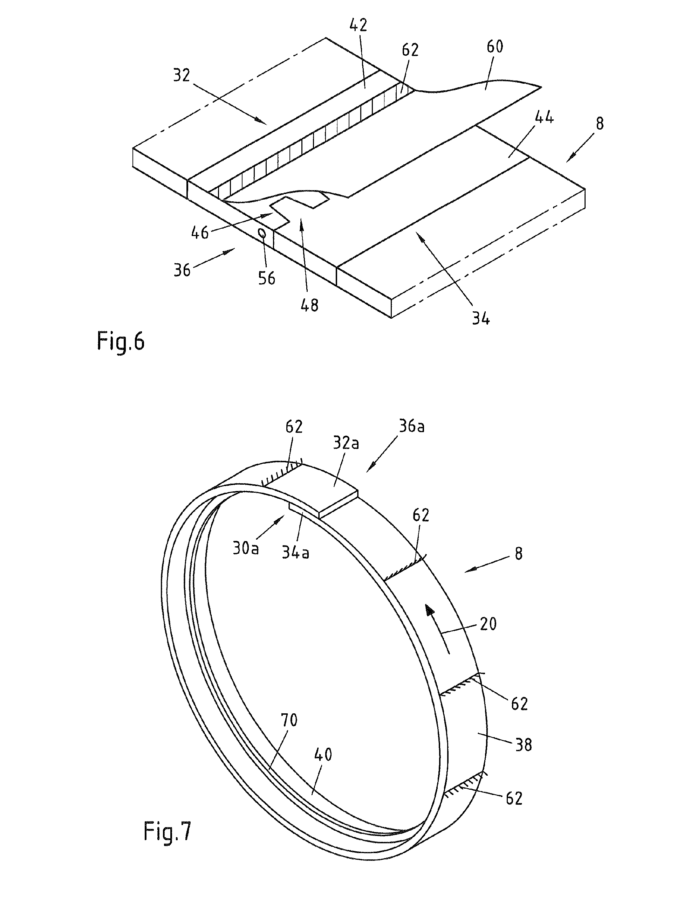

Fig. 6 zeigt das Schloss aus Fig. 4. Im Unterschied zu dem in Fig. 5 dargestellten Schloss weist das Schloss 36 keine stoffschlüssige Verbindung auf. Stattdessen weist der Fördergurt 8 eine Abdeckung 60 auf, welche das Schloss 36 zumindest im Bereich der Konturen 46, 48 auf der Außenseite 38 überdeckt. Die Abdeckung 60 ist aus Kunststoff hergestellt und über die Verbindung 62 mit der Lasche 42 stoffschlüssig verbunden. Die Verbindung 62 kann aber auch form- und/oder kraftschlüssig vorgesehen sein. Insbesondere kann die Verbindung auch alternativ oder zusätzlich mit dem Fördergurtende 32 vorgesehen sein. Die Abdeckung kann weiterhin alternativ oder zusätzlich mit der Lasche 44 und/oder dem Fördergurtende 34 realisiert sein. Es kann ebenfalls eine identische oder abweichende Abdeckung auf der Unterseite 40 vorgesehen sein. Die Abdeckung 60 deckt das Schloss 36 im Wesentlichen über seine gesamte Breite quer zur Förderrichtung 20 ab. Es ist allerdings auch möglich, die Breite der Abdeckung zu reduzieren, wenn beispielsweise ein Dichtrand in der Fördereinheit 4 die Ränder des Fördergurtes 8 ohnehin abdeckt.

Fig. 7 zeigt eine weitere Ausführungsform eines Fördergurtes 8. Das Schloss 36a stellt keine formschlüssige Verbindung zur Verfügung, sondern eine stoffschlüssige Verbindung über einen Kleber oder eine Verschweißung. Dazu sind die Fördergurtenden 32a, 34a des Fördergurtes 8 direkt miteinander verklebt oder verschweißt. Allerdings können auch hier Laschen an den Fördergurtenden 32a, 34b vorgesehen sein, welche dann stoffschlüssig miteinander Verbunden werden. Der Fördergurt 8 kann beispielsweise in einem Ausführungsbeispiel eines erfindungsgemäßen Verfahrens genutzt werden, wobei der Fördergurt 8 mit zwei durch die Unterbrechung 30a quer zur Förderrichtung 20 gebildeten Fördergurtenden 32a, 34a und mit einem Schloss 36a zur Verbindung der zwei Fördergurtenden 32a, 34a die Fördereinheit 4 mit geöffnetem, also noch nicht verklebten, Schloss 36a eingebracht wird und wobei das Schloss 36a des eingebrachten Fördergurts 8 in der Fördereinheit 4 durch Verkleben geschlossen wird. Das zuvor beschriebene Verfahren ist allerdings ebenfalls mit anderen Ausführungsformen des Fördergurts möglich, beispielsweise dem Fördergurt 8 aus den Fig. 2 bis 6.

Der Fördergurt 8 weist weiterhin einen auf der Unterseite 40 sich in Förderrichtung erstreckenden Keil 70 zur Führung auf. Damit kann verhindert oder die Gefahr verringert werden, dass sich der Fördergurt 8 während des Transports quer zur Förderrichtung 20 verschiebt oder zu hohe Belastungen quer zur Förderrichtung 20 erfährt. Dadurch kann die Haltbarkeit des Schlosses 36a zur Verbindung der zwei Fördergurtenden 32a, 34a erhöht werden und die Abnutzung, insbesondere am Rand des Fördergurtes 8 bzw. des Schlosses 36a, verringert werden. Der Keil 70 kann auch mit anderen Ausführungsbeispielen des Schlosses oder des Fördergurtes kombiniert werden.

Der Fördergurt 8 weist zusätzlich Förderelemente 62 auf, welche in Form von Kämmen oder Harken in regelmäßigen Abständen auf der Oberseite 38 des Fördergurts 8 angeordnet sind. Solche Förderelemente können auch an anderen Ausführungsformen des Fördergurts vorgesehen sein.

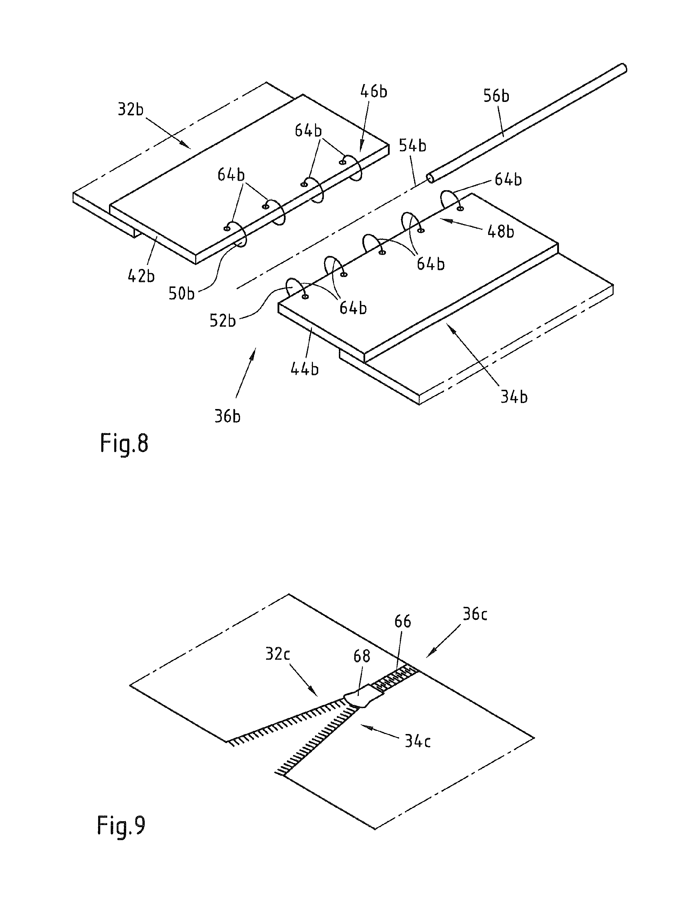

Fig. 8 zeigt ein Ausführungsbeispiel eines Schlosses 36b, welches beispielsweise ebenfalls an einem der Fördergurte 8 vorgesehen werden kann. Das Schloss 36c dient ebenfalls einer formschlüssigen Verbindung. Dazu sind an den Fördergurtenden 32b, 34b wiederum Laschen 42b, 44b vorgesehen. Diese Laschen 42b, 44b sind allerdings nicht auf Stoß wie in den Fig. 2 bis 6 mit den Fördergurtenden verbunden, sondern überlappen mit diesen. Diese Überlappung kann ebenfalls bei dem Schloss 36 vorgesehen sein. Im Bereich der Überlappung sind die Fördergurtenden 32b, 34b mit den Laschen 42b, 44b verklebt oder verschweißt. Die Konturen 46b, 48c der Laschen 42b, 44b weisen in diesem Fall jeweils mehrere Ringe 64b auf. Die Ringe 64b bilden an jeder der Laschen 42b, 44b eine Aufnahme in Form eines Durchgangs 50b bzw. 52b. Die Konturen 46b, 48b sind dabei so aneinander angepasst, dass die Laschen 42b, 44b zusammengebracht werden können und die Ringe 64c der Lasche 42b und die Ringe 64b der Lasche 44b sich in Richtung der Achse 54b überschneiden. Dadurch kann der Stift 56b in Richtung der Achse 54b in die Aufnahmen 50b bzw. 52b geschoben werden. Dadurch ist das Schloss 36b geschlossen und der entsprechende Fördergurt insbesondere gegen eine Zertrennung bei Zugbelastung gesichert.

Fig. 9 zeigt ein weiteres Ausführungsbeispiel eines Schlosses 36c. Das Schloss 36c kann ebenfalls an anderen Ausführungsbeispielen von Fördergurten, beispielsweise der Fördergurte 8, vorgesehen sein. An den Fördergurtenden 32c, 34c ist ein Reißverschluss zur Ermöglichung der formschlüssigen Verbindung der Fördergurtenden 32c, 34c vorgesehen. In diesem Fall sind keine Laschen vorgesehen, sondern der Reißverschluss 66 ist direkt an den Fördergurtenden beispielsweise mittels Verschweißen oder Kleben befestigt. Allerdings können auch hier Laschen vorgesehen werden. Durch Schließen des Reißverschlusses 66, beispielsweise mittels eines Schiebers 68, wird das Schloss 36c geschlossen und eine zumindest auch formschlüssige Verbindung erzielt.

## Patentansprüche

**1.** Tabakverteilvorrichtung
- mit einer Tabakversorgungseinheit (2),
- mit einer Fördereinheit (4),
- mit einem in der Fördereinheit (4) angeordneten Fördergurt (8, 8a) und
- mit einer Tabakaufbereitungseinheit (6),
**dadurch gekennzeichnet,**
**dass** der Fördergurt (8, 8a)
- zwei durch eine Unterbrechung (30, 30a) quer zur Förderrichtung (20) gebildete Fördergurtenden (32, 34; 32a, 34a; 32b, 34b; 32c, 34c) und
- ein Schloss (36, 36b, 36c) zur Verbindung der zwei Fördergurtenden (32, 34; 32a, 34a; 32b, 34b; 32c, 34c) durch Formschluss aufweist.

**2.** Tabakverteilvorrichtung nach Anspruch 1,
**dadurch gekennzeichnet,**
**dass** die Fördereinheit (4) ortsfest mit der Tabakversorgungseinheit (2) und der Tabakaufbereitungseinheit (6) verbunden ist.

**3.** Tabakverteilvorrichtung nach Anspruch 1 oder 2,
dass das Schloss (36, 36b, 36c) zwei Laschen (42, 44, 42b, 44b) aufweist, welche jeweils an einem Fördergurtende (32, 34; 32a, 34a; 32b, 34b; 32c, 34c) des Fördergurtes (8, 8a) befestigt sind.

**4.** Tabakverteilvorrichtung nach Anspruch 3,
**dadurch gekennzeichnet,**
**dass** die Laschen des Schlosses (36, 36b, 36c) aneinander angepasste Konturen (46, 48, 46b, 48b), insbesondere in Form eine Verzahnung (46, 48), aufweisen.

**5.** Tabakverteilvorrichtung nach Anspruch 3 oder 4,
**dadurch gekennzeichnet,**
**dass** das Schloss (36, 36b, 36c) ein Verriegelungselement (56, 56b) aufweist und dass die zwei Laschen (42, 44, 42b, 44b) jeweils eine Aufnahme (50, 52, 50b, 52b) für das Verriegelungselement (56, 56b) aufweisen.

**6.** Tabakverteilvorrichtung nach Anspruch 5,
**dadurch gekennzeichnet,**
**dass** das Verriegelungselement (56, 56b) ein Stift (50, 56b), vorzugsweise aus Plastik oder Federstahl, ist.

**7.** Tabakverteilvorrichtung nach einem der Ansprüche 1 bis 4,
**dadurch gekennzeichnet,**
**dass** das Schloss (36, 36b, 36c) einen Reißverschluss (66) aufweist.

**8.** Tabakverteilvorrichtung nach einem der Ansprüche 1 bis 7,
**dadurch gekennzeichnet,**
**dass** der Fördergurt eine Abdeckung (60) aufweist, wobei die Abdeckung (60) das Schloss (36, 36b, 36c) zumindest einseitig und zumindest teilweise überdeckt.

**9.** Tabakverteilvorrichtung nach einem der Ansprüche 1 bis 8,
**dadurch gekennzeichnet,**
**dass** das Schloss (36, 36b, 36c) die Fördergurtenden (32, 34; 32a, 34a; 32b, 34b; 32c, 34c) weiterhin durch Stoffschluss, insbesondere durch einen Kleber (58), miteinander verbindet.

**10.** Tabakverteilvorrichtung nach einem der Ansprüche 1 bis 9,
**dadurch gekennzeichnet,**
**dass** der Fördergurt (8, 8a) eine Breite zwischen 0,6 m und 1,8 m, insbesondere zwischen 1,0 m und 1,4 m, aufweist.

**11.** Verfahren zum Einsetzen eines Fördergurtes in eine Fördereinheit einer Tabakverteilvorrichtung, insbesondere gemäß einem der Ansprüche 1 bis 10,
- wobei ein einzubringender Fördergurt mit zwei durch eine Unterbrechung quer zur Förderrichtung gebildeten Fördergurtenden und mit einem Schloss zur Verbindung der zwei Fördergurtenden in die Fördereinheit mit geöffnetem Schloss eingebracht wird und
- wobei das Schloss des eingebrachten Fördergurts in der Fördereinheit geschlossen wird.

**11.** Verfahren nach Anspruch 10,
wobei der Fördergurt ohne Bewegung der Fördereinheit relativ zu der Tabakversorgungseinheit und der Tabakaufbereitungseinheit ausgewechselt wird.

**12.** Verfahren nach Anspruch 10 oder 11,
wobei das Schloss des einzubringenden Fördergurts die zwei Fördergurtenden des einzubringenden Fördergurts durch Stoffschluss verbindet.

**13.** Verfahren nach Anspruch 10 oder 11,
wobei das Schloss des einzubringenden Fördergurts die zwei Fördergurtenden des einzubringenden Fördergurts durch Formschluss verbindet.

**14.** Verfahren nach Anspruch 13,
- wobei ein auszutauschender Fördergurt mit zwei durch eine Unterbrechung quer zur Förderrichtung gebildeten Fördergurtenden und mit einem Schloss zur Verbindung der zwei Fördergurtenden entfernt wird
- wobei der auszutauschende in der Fördereinheit befindliche Fördergurt dadurch entfernt wird und der einzubringende Fördergurt mit geöffnetem Schloss in die Fördereinheit dadurch eingebracht wird,
- dass das Schloss des auszutauschenden in der Fördereinheit befindlichen Fördergurts geöffnet wird,
- dass ein Fördergurtende des einzubringende Fördergurts an ein Fördergurtende des auszutauschenden Fördergurtes mittels der Schlösser befestigt wird und
- dass der einzubringende Fördergurt mittels des auszutauschenden Fördergurtes in die Fördereinheit eingezogen wird.
